(19) Europäisches Patentamt
European Patent Office
Office européen des brevets

(11) **EP 3 369 604 B1**

(12) **EUROPEAN PATENT SPECIFICATION**

(45) Date of publication and mention
of the grant of the patent:
**11.05.2022 Bulletin 2022/19**

(21) Application number: **16859092.5**

(22) Date of filing: **28.10.2016**

(51) International Patent Classification (IPC):
**B60L 50/50** (2019.01)      **B60L 3/00** (2019.01)

(52) Cooperative Patent Classification (CPC):
**B60L 3/00; B60L 3/12; B60L 50/60; B60L 58/12; B60L 58/16;** B60L 2240/547; B60L 2240/549; B60L 2260/52; B60L 2260/54; Y02T 10/70

(86) International application number:
**PCT/CN2016/103823**

(87) International publication number:
**WO 2017/071657 (04.05.2017 Gazette 2017/18)**

(54) **METHOD AND SYSTEM FOR ESTIMATING REMAINING RANGE OF ELECTRIC CAR, AND ELECTRIC CAR**

VERFAHREN UND SYSTEM ZUR SCHÄTZUNG DER RESTREICHWEITE EINES ELEKTROFAHRZEUGS UND ELEKTROFAHRZEUG

PROCÉDÉ ET SYSTÈME D'ESTIMATION D'AUTONOMIE RESTANTE DE VÉHICULE ELECTRIQUE ET VÉHICULE ELECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.10.2015 CN 201510726116**

(43) Date of publication of application:
**05.09.2018 Bulletin 2018/36**

(73) Proprietor: **Beijing Electric Vehicle Co., Ltd. Beijing 102606 (CN)**

(72) Inventors:
• **LI, Wei**
  **Beijing 102606 (CN)**
• **DAI, Kangwei**
  **Beijing 102606 (CN)**
• **GENG, Shufang**
  **Beijing 102606 (CN)**
• **LIANG, Haiqiang**
  **Beijing 102606 (CN)**

(74) Representative: **Rössler, Matthias**
**karo IP Patentanwälte**
**Kahlhöfer Rößler Kreuels PartG mbB**
**Postfach 32 01 02**
**40416 Düsseldorf (DE)**

(56) References cited:
**CN-A- 101 879 886        CN-A- 102 358 190**
**CN-A- 103 707 777        CN-A- 105 365 592**
**US-A1- 2011 025 270      US-A1- 2012 143 435**
**US-A1- 2015 081 237**

## Description

## CROSS REFERENCE TO RELATED APPLICATION

The present application claims a priority to Chinese Patent Application Serial No. 201510726116.8 field by BEIJING ELECTRIC VEHICLE CO., LTD., on October 30, 2015 and titled with "Method, System For Estimating Remaining Range of Electric Vehicle And Electric Vehicle".

## TECHNICAL FIELD

The present disclosure generally relates to the vehicle technical field, and more particularly, to a method and a system for estimating a remaining range of an electric vehicle, and an electric vehicle.

## BACKGROUND

At present, with an increasing depletion of non-renewable energy sources and increasingly serious environmental pollutions, developments are increasingly made to vehicles in low energy consumption and low emissions. Electric vehicles have advantage of zero emissions. However, electric vehicles are limited by the development of power batteries, a range of the electric vehicle is limited, and charging the power batteries is relatively time consuming. Therefore, how to manage energy of the power battery to prolong the range of the electric vehicle is an urgent problem to be solved.

In related arts, the remaining range of the electric vehicle is usually estimated based on a linear model of state of charge of the power battery. However, since the remainingrange of the electric vehicle is not only related to the state of charge of the power battery, but also related to the driving propensities, attenuation of performances of the power battery, and the like, the remaining range of the electric vehicle estimated based on based on the linear model of the state of charge of the power battery is not accurate and reliable, thereby affecting an energy management of the power battery.

US 2012/143435 A1 provides a method for estimating a distance to empty (DTE) from the present amount of remaining fuel (the amount of remaining electricity) in an electric vehicle. An interpolation method (also named "Lagrange polynomial") is used to estimate the distance to empty, wherein two or more functions will be experimentally predetermined to correct a measurement error. Thus, the distance to empty is obtained based on a state of charge (SOC), a travelling distance, an accumulated fuel efficiency and the experimentally predetermined functions.

## SUMMARY

A first objective of embodiments of the present disclosure is to provide a method for estimating a remaining range of an electric vehicle. The method may precisely computer a remaining range of an electric vehicle, for providing a reliable basis to a subsequent energy management of the electric vehicle.

A second objective of embodiments of the present disclosure is to provide a system for estimating a remaining range of an electric vehicle.

The invention is defined by the appended independent claims. Dependent claims constitute embodiments of the invention.

In order to achieve the above objectives, the method for estimating a remaining range of an electric vehicle according to embodiments of a first aspect of the present disclosure includes the followings. A discharging current and a discharging voltage of a power battery are acquired, and current discharging energy of the power battery is computed according to the discharging current and the discharging voltage. A state of charge and a number of charging-discharging cycles of the power battery are acquired. The state of charge and the number of charging-discharging cycles of the power battery and overall discharging energy of the power battery within a unit time duration are input to a neural network, to obtain a range compensation coefficient. A traveling distance of the electric vehicle within the unit time duration is computed when the electric vehicle is in a traveling state. The remaining range of the electric vehicle is obtained according to the traveling distance of the electric vehicle within the unit time duration, the range compensation coefficient, the state of charge of the power battery, and a difference between the state of charge of the power battery before the unit time duration and the state of charge of the power battery after the unit time duration.

With the method for estimating the remaining range of an electric vehicle, since an actual remaining range of the electric vehicle is related to the state of charge of the battery, an attenuation situation of the battery (i.e., the attenuation situation is indicated by the number of charging-discharging cycles) and a driving propensity (i.e., the driving propensity is indicated by energy consumption of the power battery within the unit time duration), and a mathematic model thereof has a strong non-linear characteristic, by integrally considering the state of charge of the power battery, the attenuation situation of the power battery (i.e., the attenuation situation is indicated by the number of charging-discharging cycles) and the driving propensity (i.e., the driving propensity is indicated by energy consumption of the power battery within the unit time duration) by the method according to the present disclosure and through the neural network, the range compensation coefficient is obtained. The neural network may provide a corresponding output in response to an external excitation due to a characteristic of nonlinearity, a parallel structure and a learning ability, which has a natural advantage in solving a nonlinear problem. Therefore, the method may precisely compute the remainingrange of the electric vehicle, thereby providing a reliable basis to an energy management of the power battery.

In addition, the method for estimating a remaining range of an electric vehicle according to the above embodiment of the present disclosure may further have following additional technical features.

In some examples, the remaining range of the electric vehicle is obtained by a formula of:

$$ L = \frac{SOC}{\dfrac{\Delta SOC}{S} \times K} $$

where $L$ denotes the remaining range of the electric vehicle, $\Delta SOC$ denotes the difference between the state of charge of the power battery before the unit time duration and the state of charge of the power battery after the unit time duration, $SOC$ denotes the state of charge of the power battery, $S$ denotes the traveling distance of the electric vehicle within the unit time duration, and $K$ denotes the range compensation coefficient.

In some example, the method further includes the followings. When the electric vehicle is in a static state, the remaining range of the electric vehicle is obtained by a formula of:

$$ L = L_{old} - \frac{W_{Batt\_60s} \times S}{W_{Batt\_old}} $$

where $L_{old}$ denotes the remaining range of the electric vehicle before the unit time duration, $W_{Batt\_60s}$ denotes the overall discharging energy of the power battery within the unit time duration, and $W_{Batt\_old}$ denotes the overall discharging energy of the power battery within a previous unit time duration.

In some examples, the range compensation coefficient is obtained by the followings.

A radial basis function neural network is designed, the radial basis function neural network includes an input layer, a hidden layer, and an output layer, and the radial basis function neural network is denoted by a formula of:

$$ y(x, w) = \sum_{i=1}^{H} w_i j\left(Px - c_i P\right) $$

where $x$ denotes an input vector, and $x = [SOC\ N\ W_{Batt}]^T$, $y(x,w)$ denotes an output range compensation coefficient $K$, $w_i$ denotes a weighted value, $i$ denotes a neuron of the hidden layer, $H$ denotes the number of neurons of the hidden layer, $c_i$ denotes a central vector, $P\ x\text{-}c_i\ P$ denotes a distance to a center, $j$ denotes a radial basis function, $W_{Batt}$ denotes the overall discharging energy of the power battery, $SOC$ denotes the state of charge of the power battery, and $N$ denotes the number of charging-discharging cycles of the power battery.

In addition, the radial basis function neural network is trained according to a plurality of sets of overall discharging energy, the state of charge, the number of charging-discharging cycles of the power battery.

Furthermore, the range compensation coefficient is obtained according to a completely trained radial basis function neural network.

In some examples, after the remaining range of the electric vehicle is obtained, the method further includes when the remaining range of the electric vehicle is smaller than a first predetermined traveling range, prompting a user whether to enter an economic mode, controlling the electric vehicle to enter the economic mode when receiving an instruction for entering the economic mode, and controlling the electric vehicle to quit from the economic mode when receiving an instruction for quitting from the economic mode; and when the remaining range of the electric vehicle is smaller than a second predetermined traveling range, prompting the user whether to enter a deep-economic mode, controlling the electric vehicle to enter the deep-economic mode when receiving an instruction for entering the deep-economic mode, and controlling the electric vehicle to quit from the deep-economic mode when receiving an instruction for quitting from the deep-economic mode, in which the first predetermined traveling range is greater than the second predetermined traveling range.

In some examples, after the electric vehicle enters the economic mode, the method further includes reducing a torque response speed; reducing energy consumption of a part of components of the electric vehicle; when the obtained remaining range of the electric vehicle in the economic mode is greater than a third predetermined traveling range, prompting the user whether to quit from the economic mode, and controlling the electric vehicle to quit from the economic mode when receiving the instruction for quitting from the economic mode, in which the third predetermined traveling range is greater the first predetermined traveling range. After the electric vehicle enters the deep-economic mode, the method further includes: limiting a traveling speed of the electric vehicle within a predetermined traveling speed; further reducing the energy consumption of the part of the components of the electric vehicle and/or deactivating the part of the components of the electric vehicle; and when the obtained remaining range of the electric vehicle in the deep-economic mode is greater than a fourth predetermined traveling range, prompting the user whether to quit from the deep-economic mode, and controlling the electric vehicle to quit from the deep-economic mode when receiving the instruction for quitting from the deep-economic mode, in which the fourth predetermined traveling range is smaller than the third predetermined traveling range and greater than the first predetermined traveling range.

A system for estimating a remaining range of an electric vehicle according to embodiments of a second aspect of the present disclosure includes an energy computing module, a range compensation coefficient computing module, and a remaining range estimating module. The energy computing module is configured to acquire a discharging current and a discharging voltage of a power battery, and to compute current discharging energy of the power battery according to the discharging current and the discharging voltage. The range compensation coefficient computing module is configured to acquire a state of charge and the number of charging-discharging cycles of the power battery, and to input the state of charge and the number of charging-discharging cycles of the power battery and overall discharging energy of the power battery within a unit time duration to a neural network to obtain a range compensation coefficient. The remaining range estimating module is configured to compute a traveling distance of the electric vehicle within the unit time duration when the electric vehicle is in a traveling state, and to obtain the remaining range of the electric vehicle according to the traveling distance of the electric vehicle within the unit time duration, the range compensation coefficient, the state of charge of the power battery, and a difference between the state of charge of the power battery before the unit time duration and the state of charge of the power battery after the unit time duration.

With the system for estimating the remaining range of an electric vehicle, since an actual remaining range of the electric vehicle is related to the state of charge of the battery, an attenuation situation of the battery (i.e., the attenuation situation is indicated by the number of charging-discharging cycles) and a driving propensity (i.e., the driving propensity is indicated by energy consumption of the power battery within the unit time duration), and a mathematic model thereof has a strong non-linear characteristic, by integrally considering the state of charge of the power battery, the attenuation situation of the power battery (i.e., the attenuation situation is indicated by the number of charging-discharging cycles) and the driving propensity (i.e., the driving propensity is indicated by energy consumption of the power battery within the unit time duration) by the method according to the present disclosure and through the neural network, the range compensation coefficient is obtained. The neural network may provide a corresponding output in response to an external excitation due to a characteristic of nonlinearity, a parallel structure and a learning ability, which has a natural advantage in solving a nonlinear problem. Therefore, the system may precisely compute the remaining range of the electric vehicle, thereby providing a reliable basis to an energy management of the power battery.

In addition, the system for estimating a remaining range of an electric vehicle according to the above embodiment of the present disclosure may further have following additional technical features.

In some examples, the remaining range of the electric vehicle is obtained by a formula of:

$$L = \frac{SOC}{\frac{\Delta SOC}{S} \times K}$$

where $L$ denotes the remaining range of the electric vehicle, $\Delta SOC$ denotes the difference between the state of charge of the power battery before the unit time duration and the state of charge of the power battery after the unit time duration, $SOC$ denotes the state of charge of the power battery, $S$ denotes the traveling distance of the electric vehicle within the unit time duration, and $K$ denotes the range compensation coefficient.

In some examples, the remaining range estimating module is further configured, when the electric vehicle is in a static state, to obtain the remaining range of the electric vehicle by a formula of:

$$L = L_{old} - \frac{W_{Batt\_60s} \times S}{W_{Batt\_old}}$$

where $L_{old}$ denotes the endurance range of the electric vehicle before the unit time duration, $W_{Batt\_60s}$ denotes the overall discharging energy of the power battery within the unit time duration, and $W_{Batt\_old}$ denotes the overall discharging energy of the power battery within a previous unit time duration.

In some examples, the range compensation coefficient is obtained by the followings.

A radial basis function neural network is designed, the radial basis function neural network includes an input layer, a hidden layer, and an output layer, and the radial basis function neural network is denoted by a formula of:

$$y(x, w) = \sum_{i=1}^{H} w_i j \left( P x - c_i P \right)$$

where $x$ denotes an input vector, and $x = [SOC\ N\ W_{Batt}]^T$, $y(x,w)$ denotes an output range compensation coefficient $K$, $w_i$ denotes a weighted value, $i$ denotes a neuron of the hidden layer, $H$ denotes the number of neurons of the hidden layer, $c_i$ denotes a central vector, $P x-c_i P$ denotes a distance to a center, $j$ denotes a radial basis function, $W_{Batt}$ denotes the overall discharging energy of the power battery, $SOC$ denotes the state of charge of the power battery, and $N$ denotes the number of charging-discharging cycles of the power battery;

In addition, the radial basis function neural network is trained according to a plurality of sets of overall discharging energy, the state of charge, the number of charging-discharging cycles of the power battery.

Furthermore, the range compensation coefficient is obtained according to a completely trained radial basis function neural network.

In some examples, the system further includes a controlling module. The controlling module is configured, when the remaining range of the electric vehicle is smaller than a first predetermined traveling range, to prompt a user whether to enter an economic mode, to control the electric vehicle to enter the economic mode when an instruction for entering the economic mode is received, and to control the electric vehicle to quit from the economic mode when an instruction for quitting from the economic mode is received; when the remaining range of the electric vehicle is smaller than a second predetermined traveling range, to prompt the user whether to enter a deep-economic mode, to control the electric vehicle to enter the deep-economic mode when an instruction for entering the deep-economic mode is received, and to control the electric vehicle to quit from the deep-economic mode when an instruction for quitting from the deep-economic mode is received, in which the first predetermined traveling range is greater than the second predetermined traveling range.

In some examples, the controlling module is further configured, after the electric vehicle enters the economic mode, to reduce a torque response speed; to reduce energy consumption of a part of components of the electric vehicle; when the obtained remaining range of the electric vehicle in the economic mode is greater than a third predetermined traveling range, to prompt the user whether to quit from the economic mode, and to control the electric vehicle to quit from the economic mode when the instruction for quitting from the economic mode is received, in which the third predetermined traveling range is greater the first predetermined traveling range. The controlling module is further configured, after the electric vehicle enters the deep-economic mode, to limit a traveling speed of the electric vehicle within a predetermined traveling speed; to further reduce the energy consumption of the a part of components of the electric vehicle and/or deactivate the part of components of the electric vehicle; and when the obtained remaining range of the electric vehicle in the deep-economic mode is greater than a fourth predetermined traveling range, to prompt the user whether to quit from the deep-economic mode, and to control the electric vehicle to quit from the deep-economic mode when the instruction for quitting from the deep-economic mode is received, in which the fourth predetermined traveling range is smaller than the third predetermined traveling range and greater than the first predetermined traveling range.

An electric vehicle according to embodiments of a third aspect of the present disclosure includes the system for estimating a remaining range of an electric vehicle according to embodiments of the second aspect of the present disclosure. The electric vehicle may precisely compute the remaining range of the electric vehicle, and make the user to accurately know a situation of the electric vehicle, on the basis of this, a plurality of power-saving modes (such as the economic mode and the deep-economic mode) are provided, thereby prolonging the endurance range of the electric vehicle, satisfying various demands of the user and improving market competitiveness of the electric vehicle.

A fourth objective of embodiments of the present disclosure is to provide a device. The device includes one or more processors, a memory, and one or more programs. The one or more programs are stored in the memory, and when the one or more programs are executed by the one or more processors, the method for estimating a remaining range of an electric vehicle according to above embodiments is executed.

A fifth objective of embodiments of the present disclosure is to provide a non-volatile computer storage medium. The computer storage medium has one or more programs stored therein, and when the one or more programs are executed by a device, the method for estimating a remaining endurance range of an electric vehicle according to above embodiments is executed by the device.

With embodiments of the present disclosure, since an actual remaining range of the electric vehicle is related to the state of charge of the battery, an attenuation situation of the battery (i.e., the attenuation situation is indicated by the number of charging-discharging cycles) and a driving propensity (i.e., the driving propensity is indicated by energy consumption of the power battery within the unit time duration), and a mathematic model thereof has a strong non-linear characteristic, by integrally considering the state of charge of the power battery, the attenuation situation of the power battery (i.e., the attenuation situation is indicated by the number of charging-discharging cycles) and the driving propensity (i.e., the driving propensity is indicated by energy consumption of the power battery within the unit time duration) by the method according to the present disclosure and through the neural network, the range compensation coefficient is obtained. The neural network may provide a corresponding output in response to an external excitation due to a characteristic of nonlinearity, a parallel structure and a learning ability, which has a natural advantage in solving a nonlinear problem. Therefore, the system may precisely compute the remaining range of the electric vehicle, thereby providing a reliable basis to an energy management of the power battery.

Additional aspects and advantages of embodiments of present disclosure will be given in part in the following descriptions, become apparent in part from the following descriptions, or be learned from the practice of the embodiments of the present disclosure.

## BRIEF DESCRIPTION OF THE DRAWINGS

In order to more explicitly illustrate technical solutions in embodiments of the present disclosure, a brief introduction for the accompanying drawings used in descriptions of the embodiments and prior arts will be listed as follows. Apparently, the drawings described below are only corresponding to some embodiments of the present disclosure, and those skilled in the art may obtain other drawings according to these drawings without creative labor.

Fig. 1 is a flow chart illustrating a method for estimating a remaining range of an electric vehicle according to an embodiment of the present disclosure;

Fig. 2 is a principle diagram illustrating a computation of an endurance range through a neural network included in a method for estimating a remaining range of an electric vehicle according to an embodiment of the present disclosure;

Fig. 3 is an overall flow chart illustrating a method for estimating a remaining range of an electric vehicle according to another embodiment of the present disclosure;

Fig. 4 is a management strategy logic diagram after entering an economic mode (a common economic mode) included in a method for estimating a remaining range of an electric vehicle according to an embodiment of the present disclosure;

Fig. 5 is a management strategy logic diagram after entering a deep-economic mode included in a method for estimating a remaining range of an electric vehicle according to an embodiment of the present disclosure; and

Fig. 6 is a block diagram illustrating a system for estimating a remaining range of an electric vehicle according to an embodiment of the present disclosure.

## DETAILED DESCRIPTION

Descriptions will be made in detail to embodiments of the present disclosure. Examples of the embodiments are illustrated in the drawings. The same or similar elements and the elements having same or similar functions are denoted by like reference numerals throughout the descriptions. The embodiments described herein with reference to drawings are exemplary, only used to illustrate the present disclosure, but not construed to limit the present disclosure. Instead, the embodiments of the present disclosure comprise all the variants, modifications and their equivalents within the spirit and scope of the present disclosure as defined by the claims.

In the description of the present disclosure, it is to be understood that, terms of "first" and "second" are only used for description and cannot be seen as indicating or implying relative importance. In the description of the present disclosure, unless otherwise stipulated and restricted, terms of "linkage" and "connection" shall be understood broadly, for example, it could be fixed connection, detachable connection or integral connection; it could be mechanical connection or electrical connection; it could be direct linkage, indirect linkage via intermediate medium. Those skilled in the art shall understand the concrete notations of the terms mentioned above according to specific circumstances. Furthermore, in the description of the present disclosure, unless otherwise illustrated, a term of "a plurality of' means to two or more than two.

A method and a system for estimating a remaining range of an electric vehicle and an electric vehicle according to embodiments of the present disclosure will be described in combination with drawings.

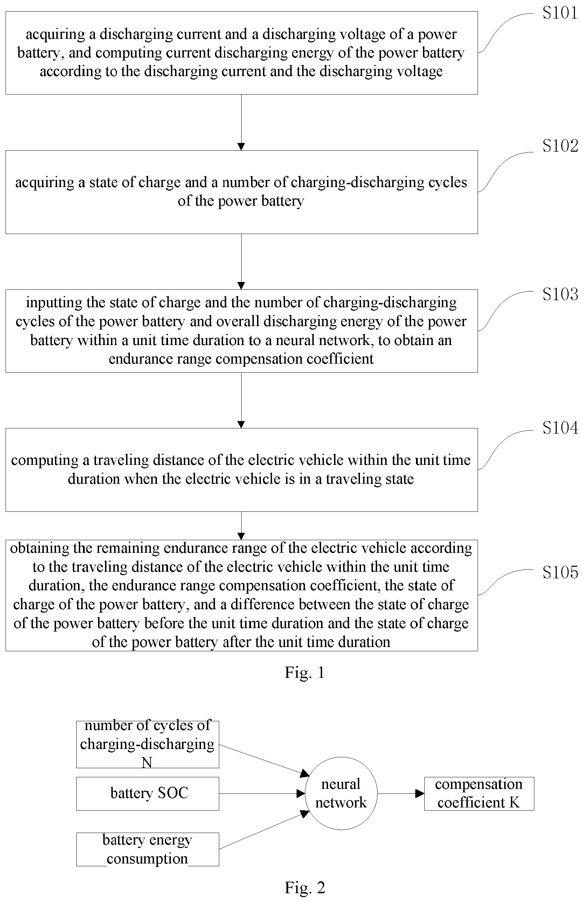

Fig. 1 is a flow chart illustrating a method for estimating a remaining range of an electric vehicle according to an embodiment of the present disclosure.

As illustrated in Fig. 1, the method for estimating a remaining range of an electric vehicle according to an embodiment of the present disclosure includes the followings.

At block S101, a discharging current and a discharging voltage of a power battery are acquired, and current discharging energy of the power battery is computed according to the discharging current and the discharging voltage.

In detail, the discharging current of the battery (i.e., an external overall current of the power battery) and the discharging voltage of the power battery (i.e., an external overall voltage of the power battery) may be obtained from a CAN (Controller Area Network) network message reported by a BMS (Battery Management System) of the vehicle.

When the discharging current and the discharging voltage of the power battery are acquired, a multiply operation is performed on the discharging current of the power battery and the discharging voltage of the power battery to obtain a discharging power $P_{Batt}$ of the power battery. An integral operation is performed on the discharging power $P_{Batt}$ to obtain battery consumption energy $W_{Batt}$ (i.e., the current discharging energy $W_{Batt}$ of the power battery).

At block S102, a SOC (State of Charge) of the power battery and the number N of charging-discharging cycles of the power battery are obtained, where N is a positive integer.

In a detailed example of the present disclosure, the state of charge SOC and the number N of charging-discharging cycles of the power battery may be obtained from the CAN network message reported by the BMS of the vehicle as well.

At block S103, the state of charge SOC and the number N of charging-discharging cycles of the power battery and overall discharging energy of the power battery within a unit time duration are input to a neural network, to obtain a range compensation coefficient.

Taking the unit time duration to be 60 seconds as an example, the state of charge SOC of the power battery, the number N of charging-discharging cycles of the power battery (i.e., the number N of cycles for completely charging and completely discharging the power battery) and the overall discharging power energy of the power battery within 60 seconds are taken as inputs of the neural network, and an output value of the neural network is the range compensation coefficient K. As illustrated in Fig. 2, a schematic diagram of computing the range compensation coefficient through the neural network is illustrated, where the three input variants are the number N of completely charging-discharging cycles of the power battery (i.e., the number N of cycles for completely charging and completely discharging the power battery), the battery SOC (i.e. the SOC of the power battery) and the battery energy consumption (i.e., the overall discharging energy of the power battery within 60 seconds), and the compensation coefficient K (i.e., the range compensation coefficient K) is output.

In detail, the range compensation coefficient is obtained by followings.

A radial basis function (RBF) neural network is designed. The radial basis function neural network includes an input layer, a hidden layer, and an output layer. The radial basis function neural network is denoted by a formula of:

$$y(x, w) = \sum_{i=1}^{H} w_i j(Px - c_i P)$$

where $x$ denotes an input vector, and $x = [SOC\ N\ W_{Batt}]^T$, $y(x,w)$ denotes an output range compensation coefficient $K$, $w_i$ denotes a weighted value, i denotes a neuron of the hidden layer, $H$ denotes the number of neurons of the hidden layer, $c_i$ denotes a central vector, $Px - C_i P$ denotes a distance to a center, $j$ denotes a radial basis function, $W_{Batt}$ denotes the overall discharging energy of the power battery, $SOC$ denotes the state of charge of the power battery, and $N$ denotes the number of charging-discharging cycles of the power battery.

The radial basis function neural network is trained according to a plurality of sets of overall discharging energy, the state of charge, and the number of charging-discharging cycles of the power battery.

The range compensation coefficient is obtained according to a completely trained radial basis function neural network.

In more detail, it is considered that the external overall voltage of the power battery is accordingly decreased after the battery SOC is decreased, additional energy consumption of the vehicle may be resulted from activating a device with a rapid acceleration, a rapid deceleration and a high consumption (mainly including heat dissipation of a battery pack and heat dissipation of a drive system), and performances of the power battery attenuate as the number of charging-discharging of the battery is increased, the above factors may lead to a rapid decrease of the remaining range. To this end, the above three variants are quantized specifically as the battery SOC, the energy consumption $W_{Batt}$ when the vehicle travels a distance within the unit time duration (60 seconds), and the number $N$ of cycles for completely charging and completely discharging the power battery (corresponding to the battery attenuation degree). According to the above three quantized variants, the neural network is designed to compute the range compensation coefficient $K$.

As a feedforward neural network with a good performance, the RBF neural network may approximate any non-linear function with an arbitrary precision, has a compact topology, a global approximation ability, and may solve a local optimum problem of a back-propagation (BP) network as well. Therefore, the RBF neural network is designed to compute the range compensation coefficient $K$.

The designed RBF neural network is divided into three layers, including the input layer, the hidden layer and the output layer. The number of neurons of the hidden layer is 3. The RBF neural network is denoted by a formula of:

$$y(x, w) = \sum_{i=1}^{H} w_i j(Px - c_i P)$$

where $x$ denotes an input vector, and $x = [SOC\ N\ W_{Batt}]^T$, $y(x,w)$ denotes a network output, i.e., the rang compensation coefficient $K$, $w_i$ denotes a weighted value, $i$ denotes a neuron of the hidden layer, $H$ denotes the number of neurons of the hidden layer and H equals to 3, $c_i$ denotes a central vector, $Px - c_i P$ denotes a distance to a center, $j$ denotes a radial basis function and is a Gaussian radial basis function herein.

After the neural network is designed, the neural network is trained. 250 sets (1000 sets totally) of driving data $SOC$, $N$ and $W_{Batt}$ (obtained under different driving propensities and with different SOCs) are sampled respectively from driving data corresponding to four intervals for the number of completely charging-discharging cycles $N \in [0\ 250)$, $N \in [250\ 500)$, $N \in [500\ 1000)$, and $N \in [1000\ \infty)$. 1000 sets of real rang compensation coefficients $K$ are computed according to actual endurance ranges and estimated endurance ranges. These 1000 sets of data $[SOC\ W_{Batt}\ N\ K]$ are taken as basis data to train the RBP neural network, and the trained neural network is finally used for computing the range compensation coefficient $K$.

At block S104, when the electric vehicle is in a traveling state, a traveling distance $S$ of the electric vehicle within the unit time duration is computed.

The traveling distance S of the vehicle within the unit time duration (60 seconds) may be obtained by performing an integral operation on a result of dividing a rotational speed of a drive motor of the vehicle by a reduction ratio. The rotational speed of the drive motor of the vehicle may be obtained from the CAN message reported by a motor controller.

At block S105, the remaining range of the electric vehicle is obtained according to the traveling distance S of the electric vehicle within the unit time duration, the range compensation coefficient K, the state of charge SOC of the power battery, and a difference $\Delta SOC$ between the state of charge of the power battery before the unit time duration and the state of charge of the power battery after the unit time duration.

For example, the remaining range of the vehicle is obtained by a formula of:

$$L = \frac{SOC}{\dfrac{\Delta SOC}{S} \times K} \qquad (1)$$

where $L$ denotes the remaining range of the electric vehicle, $\Delta SOC$ denotes the difference between the SOC of the power battery before the unit time duration (such as 60 seconds) and the SOC of the power battery after the unit time duration, $SOC$ denotes the state of charge of the power battery (i.e., the state of charge of the power battery before the unit time duration), $S$ denotes the traveling distance of the electric vehicle within the unit time duration, and $K$ denotes the range compensation coefficient.

It is to be illustrated that, the range compensation coefficient K may be increased with the decrease of the state of charge SOC of the power battery, the increase of the energy consumption of the battery within the unit time duration, and the increase of the number of completely charging-discharging cycles, which is obtained through neural network specifically.

In addition, the above formula used for computing the remaining range of the vehicle is only applicable to a traveling process of the vehicle. That is, only when the vehicle is in the traveling state, the remaining range of the vehicle may be precisely computed according to the above formula.

However, in a case where the vehicle may be in a static state, for example, when the vehicle waits traffic lights, although the vehicle is not traveling, the energy of the power battery is also consumed. In this case, the remaining range of the vehicle may be computed by a following formula:

$$L = L_{old} - \frac{W_{Batt\_60s} \times S}{W_{Batt\_old}} \qquad (2)$$

where $L_{old}$ denotes the remaining range of the electric vehicle before the unit time duration (such as 60 seconds), $W_{Batt\_60s}$ denotes the overall discharging energy of the power battery within the unit time duration, and $W_{Batt\_old}$ denotes the overall discharging energy of the power battery within a previous unit time duration. In detail, for example when the vehicle is in the traveling state within the previous 60 seconds and the vehicle is in the static state for waiting the traffic lights within a next 60 seconds, the remaining range of the vehicle when the vehicle is in the traveling state within the previous 60 seconds may be obtained using the formula (1), i.e., the $L_{old}$. Then, the remaining range of the vehicle when the vehicle is in the current static state may be precisely obtained using the formula (2).

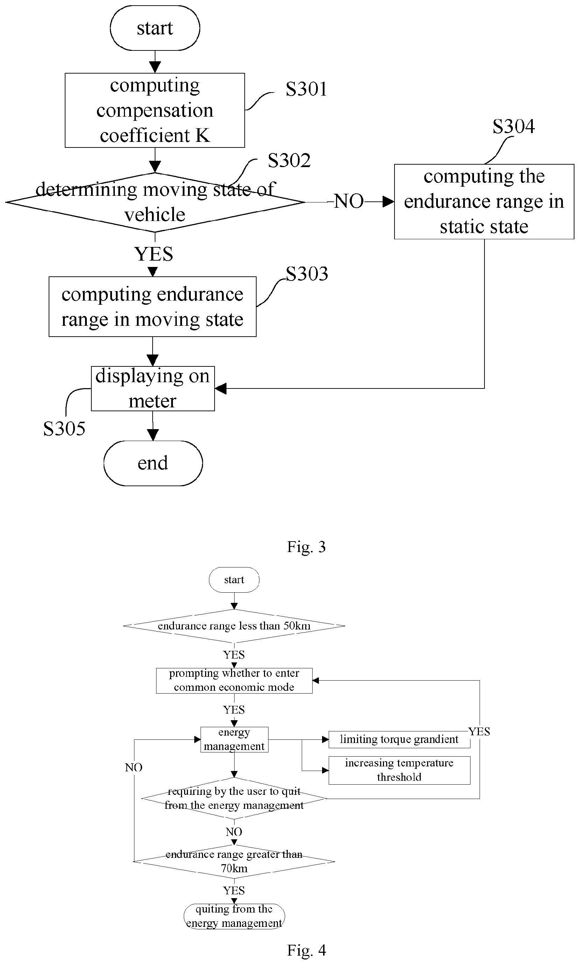

In conclusion, an overall flow chart of a method for estimating a remaining range of the electric vehicle is illustrated as Fig. 3. The method includes the followings.

At block S301, the rang compensation coefficient K is computed. That is, the range compensation coefficient K is computed through the neural network.

At block S302, it is determined whether the vehicle is in a moving state, i.e., the traveling state. If the vehicle is in the moving state, a block S303 is performed, otherwise a block S304 is performed.

At block S303, the endurance range in the moving state is computed. That is, the remaining range of the vehicle is computed through the formula (1).

At block S304, the endurance range in the static state is computed. That is, the remaining range of the vehicle is computed through the formula (2).

At block S305, the remaining endurance range is displayed on a meter. That is, the remaining range of the vehicle is displayed in real time through the meter.

With the method for estimating the remaining range of an electric vehicle, since an actual remaining range of the electric vehicle is related to the state of charge of the battery, an attenuation situation of the battery (i.e., the attenuation situation is indicated by the number of charging-discharging cycles) and a driving propensity (i.e., the driving propensity is indicated by energy consumption of the power battery within the unit time duration), and a mathematic model thereof has a strong non-linear characteristic, by integrally considering the state of charge of the power battery, the attenuation situation of the power battery (i.e., the attenuation situation is indicated by the number of charging-discharging cycles) and the driving propensity (i.e., the driving propensity is indicated by energy consumption of the power battery within the unit time duration) by the method according to the present disclosure and through the neural network, the range compensation coefficient is obtained. The neural network may provide a corresponding output in response to an external excitation due to a characteristic of nonlinearity, a parallel structure and a learning ability, which has a natural advantage in solving a nonlinear problem. Therefore, the method may precisely compute the remaining range of the electric vehicle, thereby providing a reliable basis to an energy management of the power battery.

In an embodiment of the present disclosure, after the remaining range of the vehicle is obtained, the method further includes the followings. When the remaining range of the electric vehicle is smaller than a first predetermined traveling range, it is prompted to a user whether to enter an economic mode (i.e., a common economic mode), the electric vehicle is controlled to enter the economic mode when receiving an instruction for entering the economic mode, and the electric vehicle is controlled to quit from the economic mode when receiving an instruction for quitting from the economic mode. When the remaining range of the electric vehicle is smaller than a second predetermined traveling range, it is prompted to the user whether to enter a deep-economic mode, the electric vehicle is controlled to enter the deep-economic mode when receiving an instruction for entering the deep-economic mode, and the electric vehicle is controlled to quit from the deep-economic mode when receiving an instruction for quitting from the deep-economic mode. The first predetermined traveling range is greater than the second predetermined traveling range. The first predetermined traveling range is for example 50 kilometers. The second predetermined traveling range is for example 25 kilometers.

In detail, as illustrated in Fig. 4, when the vehicle enters the economic mode, the method further includes reducing a torque response speed; reducing energy consumption of a part of components of the electric vehicle. The method further includes when the obtained remaining range of the electric vehicle in the economic mode is greater than a third predetermined traveling range, prompting the user whether to quit from the economic mode, and controlling the electric vehicle to quit from the economic mode when receiving the instruction for quitting from the economic mode. The third predetermined traveling range is greater the first predetermined traveling range. The third predetermined traveling range is for example 70 kilometers.

For example, when it is determined to enter the common economic mode, following strategies are executed.

    (1) A torque response gradient of an accelerator pedal is performed at 0.3 times of an original one, to reduce the torque response speed and thus reduce energy consumption.
    (2) Temperature thresholds of turning a radiator pump and a fan on by the drive motor and the motor controller are increased to reduce the energy consumption of accessories.
    (3) Considering that after the vehicle enters the common economic mode, the driver may change the driving way (for example, from frequent acceleration and braking to constant speed driving), the remaining range may be increased and may exceed for example 50 km. For this reason, in this strategy, when the remaining range exceeds 70km, the meter may prompt whether to quit from the common economy mode. The driver may select or refuse to quit from the common economy mode via a multi-function steering wheel.

In addition, the driver may quit from the common economic mode at any time via the multi-function steering wheel when the driver does not satisfy with driving experience corresponding to the common economic mode.

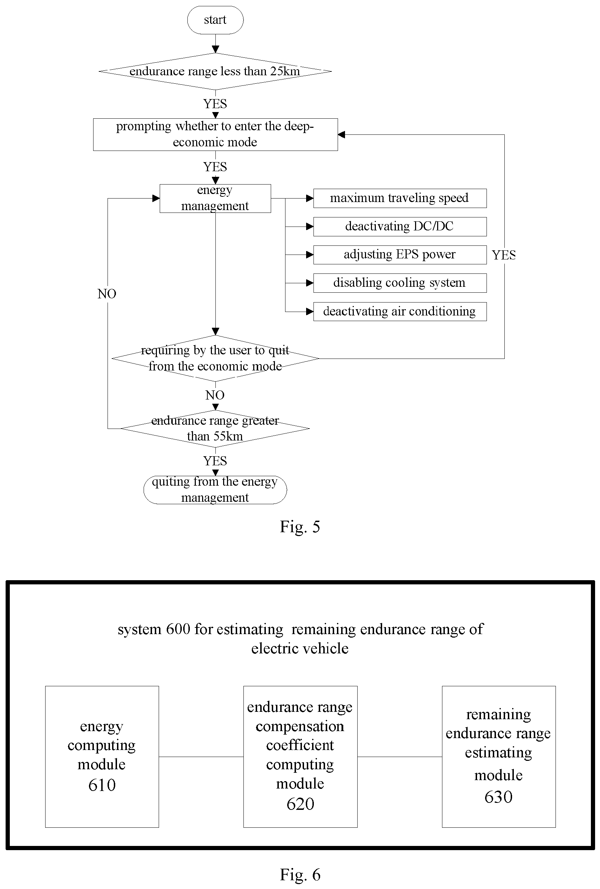

As illustrated in Fig. 5, after the vehicle enters the deep-economic mode, the method further includes limiting traveling speed of the electric vehicle within a predetermined traveling speed, and further reducing the energy consumption of the part of the components of the electric vehicle is further reduced and/or deactivating the part of the components of the electric vehicle. The method further includes when the obtained remaining range of the electric vehicle in the deep-economic mode is greater than a fourth predetermined traveling range, prompting the user whether to quit from the deep-economic mode, and controlling the electric vehicle to quit from the deep-economic mode when receiving the instruction for quitting from the deep-economic mode. The fourth predetermined traveling range is smaller than the third predetermined traveling range and greater than the first predetermined traveling range. The fourth predetermined traveling range is for example 55 kilometers.

For example, when it is selected to enter the deep-economic mode, following control strategies may be executed.

    (1) A maximum traveling speed of the electric vehicle is limited, for example to 30km/h.
    (2) A DC/DC (direct current to direct current conversion module) is deactivated, to reduce the power consumption of the vehicle.
    (3) An electronic power steering (EPS) system provides power to the vehicle with minimal power consumption.
    (4) The EPS is a low voltage component, powered for example by a 12V battery. This strategy may greatly reduce a pressure of the 12V battery after deactivating the DC/DC so as to prolong the endurance range of the vehicle.
    (5) The radiator pump and the fan are disabled. Since there is no demand of water cooling by the drive system after the traveling speed of the vehicle is limited, the radiator pump and the fun are disabled to reduce the energy consumption. At the same time, since the pump and the fun are powered by the 12V battery, this strategy may reduce a load of the 12V battery after the DC/DC is disabled.
    (6) An air conditioning including a compressor and a heater is deactivated. By disabling the air conditioning, the power consumption of the vehicle is further reduced.
    (7) Considering that after the vehicle enters the deep-economic mode, the driver may change the driving way (for example, from frequent acceleration and braking to constant speed driving), the remaining range may be increased and may exceed for example 25 km. For this reason, when the remaining range exceeds 55km, the meter may prompt whether to quit from the deep-economy mode. The driver may select or refuse to quit from the deep-economy mode via a multi-function steering wheel.

In addition, the driver may quit from the deep-economic mode at any time via the multi-function steering wheel when the driver does not satisfy with driving experience the deep-economic mode, so as to improve driving experience.

The method for estimating the remaining range of an electric vehicle according to embodiments of the present disclosure may precisely compute the remaining range of the electric vehicle, and make the user to accurately know a situation of the electric vehicle. On the basis of this, a plurality of power-saving modes (such as the economic mode and the deep-economic mode) are provided, thereby prolonging the endurance range of the electric vehicle, satisfying various demands of the user and improving market competitiveness of the electric vehicle.

Fig. 6 is a block diagram illustrating a system for estimating a remaining range of an electric vehicle according to an embodiment of the present disclosure. As illustrated in Fig. 6, the system 600 for estimating a remaining range of an electric vehicle according to an embodiment of the present disclosure includes an energy computing module 610, a range compensation coefficient computing module 620 and a remaining range estimating module 630.

The energy computing module 610 is configured to acquire a discharging current and a discharging voltage of a power battery, and to compute current discharging energy of the power battery according to the discharging current and the discharging voltage. The range compensation coefficient computing module 620 is configured to acquire a state of charge and the number of charging-discharging cycles of the power battery, and to input the state of charge and the number of charging-discharging cycles of the power battery and overall discharging energy of the power battery within a unit time duration to a neural network, to obtain a range compensation coefficient. The remaining range estimating module 630 is configured to compute a traveling distance of the electric vehicle within the unit time duration when the electric vehicle is in a traveling state, and to obtain the remaining range of the electric vehicle according to the traveling distance of the electric vehicle within the unit time duration, the range compensation coefficient, the state of charge of the power battery, and a difference between the state of charge of the power battery before the unit time duration and the state of charge of the power battery after the unit time duration.

With the system for estimating the remaining range of an electric vehicle, since an actual remaining range of the electric vehicle is related to the state of charge of the battery, an attenuation situation of the battery (i.e., the attenuation situation is indicated by the number of charging-discharging cycles) and a driving propensity (i.e., the driving propensity is indicated by energy consumption of the power battery within the unit time duration), and a mathematic model thereof has a strong non-linear characteristic, by integrally considering the state of charge of the power battery, the attenuation situation of the power battery (i.e., the attenuation situation is indicated by the number of charging-discharging cycles) and the driving propensity (i.e., the driving propensity is indicated by energy consumption of the power battery within the unit time duration) by the method according to the present disclosure and through the neural network, the range compensation coefficient K is obtained. The neural network may provide a corresponding output in response to an external excitation due to a characteristic of nonlinearity, a parallel structure and a learning ability, which has a natural advantage in solving a nonlinear problem. Therefore, the system may precisely compute the remaining range of the electric vehicle, thereby providing a reliable basis to an energy management of the power battery.

In an embodiment of the present disclosure, the range compensation coefficient is obtained by the followings.

A radial basis function neural network is designed. The radial basis function neural network includes an input layer, a hidden layer, and an output layer. The radial basis function neural network is denoted by a formula of:

$$y(x, w) = \sum_{i=1}^{H} w_i j \left( Px - c_i P \right)$$

where $x$ denotes an input vector, and $x = [SOC\ N\ W_{Batt}]^T$, $y(x,w)$ denotes an output range compensation coefficient $K$, $w_i$ denotes a weighted value, $i$ denotes a neuron of the hidden layer, $H$ denotes the number of neurons of the hidden layer, $c_i$ denotes a central vector, $P x-c_i P$ denotes a distance to a center, $j$ denotes a radial basis function, $W_{Batt}$ denotes the overall discharging energy of the power battery, $SOC$ denotes the state of charge of the power battery, and $N$ denotes the number of charging-discharging cycles of the power battery;

The radial basis function neural network is trained according to a plurality of sets of overall discharging energy, the state of charge, the number of charging-discharging cycles of the power battery.

The range compensation coefficient is obtained according to a completely trained radial basis function neural network.

In an embodiment of the present disclosure, the remaining range of the electric vehicle is obtained by a formula of:

$$L = \frac{SOC}{\dfrac{\Delta SOC}{S} \times K}$$

where $L$ denotes the remaining range of the electric vehicle, $\Delta SOC$ denotes the difference between the state of charge of the power battery before the unit time duration and the state of charge of the power battery after the unit time duration, $SOC$ denotes the state of charge of the power battery, $S$ denotes the traveling distance of the electric vehicle within the unit time duration, and $K$ denotes the range compensation coefficient.

In an embodiment of the present disclosure, the remaining range estimating module is further configured, when the electric vehicle is in a static state, to obtain the remaining range of the electric vehicle by a formula of:

$$L = L_{old} - \frac{W_{Batt\_60s} \times S}{W_{Batt\_old}}$$

where $L_{old}$ denotes the remaining range of the electric vehicle before the unit time duration, $W_{Batt\_60s}$ denotes the overall discharging energy of the power battery within the unit time duration, and $W_{Batt\_old}$ denotes the overall discharging energy of the power battery within a previous unit time duration.

In an embodiment of the present disclosure, the system is further includes a controlling module (not illustrated in drawings). The controlling module is configured, when the remaining range of the electric vehicle is smaller than a first predetermined traveling range, to prompt a user whether to enter an economic mode, to control the electric vehicle to enter the economic mode when an instruction for entering the economic mode is received, and to control the electric vehicle to quit from the economic mode when an instruction for quitting from the economic mode is received. The controlling module is further configured, when the remaining range of the electric vehicle is smaller than a second predetermined traveling range, to prompt the user whether to enter a deep-economic mode, to control the electric vehicle to enter the deep-economic mode when an instruction for entering the deep-economic mode is received, and to control the electric vehicle to quit from the deep-economic mode when an instruction for quitting from the deep-economic mode is received. The first predetermined traveling range is greater than the second predetermined traveling range.

Further, the controlling module is further configured, after the electric vehicle enters the economic mode, to reduce a torque response speed; and to reduce energy consumption of a part of components of the electric vehicle. The controlling module is configured, when the obtained remaining range of the electric vehicle in the economic mode is greater than a third predetermined traveling range, to prompt the user whether to quit from the economic mode, and to control the electric vehicle to quit from the economic mode when the instruction for quitting from the economic mode is received. The third predetermined traveling range is greater the first predetermined traveling range. The controlling module is configured, after the electric vehicle enters the deep-economic mode, to limit a traveling speed of the electric vehicle within a predetermined traveling speed; and to further reduce the energy consumption of the a part of components of the electric vehicle and/or deactivate the part of components of the electric vehicle. The controlling module is configured, when the obtained remaining range of the electric vehicle in the deep-economic mode is greater than a fourth predetermined traveling range, to prompt the user whether to quit from the deep-economic mode, and to control the electric vehicle to quit from the deep-economic mode when the instruction for quitting from the deep-economic mode is received. The fourth predetermined traveling range is smaller than the third predetermined traveling range and greater than the first predetermined traveling range.

The system for estimating a remaining range of an electric vehicle according to embodiments of the present disclosure may precisely compute the remaining range of the electric vehicle, and make the user to accurately know a situation of the electric vehicle. On the basis of this, a plurality of power-saving modes (such as the economic mode and the deep-economic mode) are provided, thereby prolonging the endurance range of the electric vehicle, satisfying various demands of the user and improving market competitiveness of the electric vehicle.

It is to be illustrated that, a specific implementation of the system for estimating a remaining range of an electric vehicle provided in embodiments of the present disclosure is similar to a specific implementation of the method for estimating a remaining range of an electric vehicle provided in embodiments of the present disclosure, and may be referred to descriptions corresponding to the method in detail, which is not elaborated for redundancy reduction.

Further, embodiments of the present disclosure provide an electric vehicle. The electric vehicle includes the system for estimating a remaining range of an electric vehicle according to above embodiments of the present disclosure. The vehicle may precisely compute the remaining range of the electric vehicle, and make the user to accurately know a situation of the electric vehicle. On the basis of this, a plurality of power-saving modes (such as the economic mode and the deep-economic mode) are provided, thereby prolonging the endurance range of the electric vehicle, satisfying various demands of the user and improving market competitiveness of the electric vehicle.

In addition, other constitutes and functions of a system for estimating a remaining range of an electric vehicle are known for those skilled in the art, which are not elaborated for redundancy reduction.

Embodiments of the present disclosure further provide a device. The device includes one or more processors, a memory and one or more programs. The one or more programs are stored in the memory. When the one or more programs are executed by the one or more processors, the method for estimating a remaining range of an electric vehicle according to above embodiments is executed.

Embodiments of the present disclosure further provide a non-volatile computer storage medium. The computer storage medium has one or more programs stored therein. When the one or more programs are executed by a device, the method for estimating a remaining range of an electric vehicle according to above embodiments is executed by the device.

In addition, other constitutes and functions of the system for estimating a remaining range of an electric vehicle and the non-volatile computer storage medium provided in embodiments of the present disclosure are known for those skilled in the art, which are not elaborated for redundancy reduction.

It is to be understood that, each part of the present disclosure may be realized by hardware, software, firmware or a combination thereof. In the above implementations, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

In the description of the specification, description referring to "an embodiment," "some embodiments," "example," "a specific example," or "some examples," intends to mean that a particular feature, structure, material, or characteristic described in connection with the embodiment or example is included in at least one embodiment or example of the present disclosure. In the specification, the schematic representations of the above terms mentioned above are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated by those skilled in the art that changes, modifications, alternatives, and variants can be made in the embodiments without departing from scope of the present disclosure, and the scope of the present disclosure is defined by claims and their equivalents.

Furthermore, the particular features, structures, materials, or characteristics may be combined in any suitable manner in one or more embodiments or examples.

Although explanatory embodiments have been shown and described, it would be appreciated by those skilled in the art that changes, modifications, alternatives, and variants can be made in the embodiments without departing from scope of the present disclosure, and the scope of the present disclosure is defined by claims

## Claims

1. A method for determining a remaining range of an electric vehicle, comprising:

   acquiring (S101) a discharging current and a discharging voltage of a power battery, and computing current discharging energy of the power battery according to the discharging current and the discharging voltage;
   acquiring (S102) a state of charge of the power battery and a total number of cycles for completely charging and completely discharging that the power battery has undergone;
   inputting (SI03) the state of charge of the power battery, the total number of cycles for completely charging and completely discharging and overall discharging energy of the power battery within a unit time duration to a neural network, to obtain a range compensation coefficient;
   when the electric vehicle is in a traveling state, calculating (S104) the distance travelled by the electric vehicle in the unit time duration; and
   obtaining (S105) the remaining range of the electric vehicle according to the traveling distance of the electric vehicle within the unit time duration, the range compensation coefficient, the state of charge of the power battery, and a difference between the state of charge of the power battery before the unit time duration and the state of charge of the power battery after the unit time duration,
   wherein the range compensation coefficient is obtained by:

      designing a radial basis function neural network, the radial basis function neural network comprising an input layer, a hidden layer, and an output layer, and the radial basis function neural network being denoted by a formula of:

      $$y(x,w) = \sum_{i=1}^{H} w_i j\left(Px - c_i P\right)$$

      where $x$ denotes an input vector, and $x = [SOC\ N\ W_{Batt}]^{\mathrm{T}}$, $y(x,w)$ denotes an output range compensation coefficient $K$, $w_i$ denotes a weighted value, $i$ denotes a neuron of the hidden layer, $H$ denotes the number of neurons of the hidden layer, $c_i$ denotes a central vector, $Px - C_i P$ denotes a distance to a center, $j$ denotes a radial basis function, $W_{Batt}$ denotes the overall discharging energy of the power battery, $SOC$ denotes the state of charge of the power battery, and $N$

denotes the total number of cycles for completely charging and completely discharging that the power battery has undergone; training the radial basis function neural network according to a plurality of sets of overall discharging energy, the state of charge of the power battery, and the total number of cycles for completely charging and completely discharging; and obtaining the range compensation coefficient according to a completely trained radial basis function neural network, and

wherein the remaining range of the electric vehicle is obtained by a formula of:

$$L = \frac{SOC}{\frac{\Delta SOC}{S} \times K}$$

where $L$ denotes the remaining range of the electric vehicle, $\Delta SOC$ denotes the difference between the state of charge of the power battery before the unit time duration and the state of charge of the power battery after the unit time duration, $SOC$ denotes the state of charge of the power battery, $S$ denotes the distance travelled by the electric vehicle within the unit time duration, and $K$ denotes the range compensation coefficient.

2. The method according to claim 1, further comprising: when the electric vehicle is in a static state, the remaining range of the electric vehicle is obtained by a formula of:

$$L = L_{old} - \frac{W_{Batt\_60s} \times S}{W_{Batt\_old}}$$

where $L_{old}$ denotes the remaining range of the electric vehicle before the unit time duration, $W_{Batt\_60s}$ denotes the overall discharging energy of the power battery within the unit time duration, and $W_{Batt\_old}$ denotes the overall discharging energy of the power battery within a previous unit time duration.

3. The method according to claim 1 or 2, after obtaining the remaining range of the electric vehicle, further comprising:

when the remaining range of the electric vehicle is smaller than a first predetermined traveling range, prompting a user whether to enter an economic mode, controlling the electric vehicle to enter the economic mode when receiving an instruction for entering the economic mode, and controlling the electric vehicle to quit from the economic mode when receiving an instruction for quitting from the economic mode; when the remaining range of the electric vehicle is smaller than a second predetermined traveling range, prompting the user whether to enter a deep-economic mode, controlling the electric vehicle to enter the deep-economic mode when receiving an instruction for entering the deep-economic mode, and controlling the electric vehicle to quit from the deep-economic mode when receiving an instruction for quitting from the deep-economic mode, wherein the first predetermined traveling range is greater than the second predetermined traveling range.

4. The method according to any one of claims 1 to 3, wherein after the electric vehicle enters the economic mode, the method further comprises:

reducing a torque response speed; reducing energy consumption of a part of components of the electric vehicle; when the obtained remaining range of the electric vehicle in the economic mode is greater than a third predetermined traveling range, prompting the user whether to quit from the economic mode, and controlling the electric vehicle to quit from the economic mode when receiving the instruction for quitting from the economic mode, wherein the third predetermined traveling range is greater the first predetermined traveling range; wherein after the electric vehicle enters the deep-economic mode, the method further comprises:

limiting a traveling speed of the electric vehicle within a predetermined traveling speed; further reducing the energy consumption of the part of the components of the electric vehicle and/or deactivating the part of the components of the electric vehicle; and when the obtained remaining range of the electric vehicle in the deep-economic mode is greater than a fourth predetermined traveling range, prompting the user whether to quit from the deep-economic mode, and controlling the electric vehicle to quit from the deep-economic mode when receiving the instruction for quitting from the deep-economic mode, wherein the fourth predetermined traveling range is smaller than the third predetermined traveling range and greater than the first predetermined traveling range.

5. A system (600) for determining a remaining range of an electric vehicle, comprising:

an energy computing module (610), configured to acquire a discharging current and a discharging voltage of a power battery, and to compute current discharging energy of the power battery according to the discharging current and the discharging voltage;

a range compensation coefficient computing module (620), configured to acquire a state of charge of the power battery and a total number of cycles for completely charging and completely discharging that the power battery has undergone, and input the state of charge of the power battery, the total number of cycles for completely charging and completely discharging and the overall discharging energy of the power battery within a unit time duration to a neural network, to obtain a range compensation coefficient;

a remaining range estimating module (630), configured, when the electric vehicle is in a traveling state, to calculate the distance travelled by the electric vehicle in the unit time duration, and obtain the remaining range of the electric vehicle according to the traveling distance of the electric vehicle within the unit time duration, the range compensation coefficient, the state of charge of the power battery, and a difference between the state of charge of the power battery before the unit time duration and the state of charge of the power battery after the unit time duration,

wherein the range compensation coefficient is obtained by:

designing a radial basis function neural network, the radial basis function neural network comprising an input layer, a hidden layer, and an output layer, and the radial basis function neural network being denoted by a formula of:

$$y(x,w) = \sum_{i=1}^{H} w_i\, j\left(Px - c_i P\right)$$

where $x$ denotes an input vector, and $x =$ [$SOC\ N\ W_{Batt}$]$^T$, $y(x,w)$ denotes an output range compensation coefficient $K$, $w_i$ denotes a weighted value, $i$ denotes a neuron of the hidden layer, $H$ denotes the number of neurons of the hidden layer, $c_i$ denotes a central vector, $Px - C_i P$ denotes a distance to a center, $j$ denotes a radial basis function, $W_{Batt}$ denotes the overall discharging energy of the power battery, $SOC$ denotes the state of charge of the power battery, and $N$

denotes the total number of cycles for completely charging and completely discharging that the power battery has undergone; training the radial basis function neural network according to a plurality of sets of overall discharging energy, the state of charge of the power battery, and the total number of cycles for completely charging and completely discharging; and

obtaining the range compensation coefficient according to a completely trained radial basis function neural network, and
wherein the remaining range of the electric vehicle is obtained by a formula of:

$$L = \frac{SOC}{\dfrac{\Delta SOC}{S} \times K}$$

where $L$ denotes the remaining range of the electric vehicle, $\Delta SOC$ denotes the difference between the state of charge of the power battery before the unit time duration and the state of charge of the power battery after the unit time duration, $SOC$ denotes the state of charge of the power battery, $S$ denotes the traveling distance of the electric vehicle within the unit time duration, and $K$ denotes the range compensation coefficient.

6. The system according to claim 5, wherein the remaining range estimating module (630) is further configured:
when the electric vehicle is in a static state, to obtain the remaining range of the electric vehicle by a formula of:

$$L = L_{old} - \frac{W_{Batt\_60s} \times S}{W_{Batt\_old}}$$

where $L_{old}$ denotes the remaining range of the electric vehicle before the unit time duration, $W_{Batt\_60s}$ denotes the overall discharging energy of the power battery within the unit time duration, and $W_{Batt\_old}$ denotes the overall discharging energy of the power battery within a previous unit time duration.

7. The system according to claim 5 or 6, further comprising a controlling module, wherein the controlling module is configured:

when the remaining range of the electric vehicle is smaller than a first predetermined traveling range, to prompt a user whether to enter an economic mode, to control the electric vehicle to

14

enter the economic mode when an instruction for entering the economic mode is received, and to control the electric vehicle to quit from the economic mode when an instruction for quitting from the economic mode is received; when the remaining range of the electric vehicle is smaller than a second predetermined traveling range, to prompt the user whether to enter a deep-economic mode, to control the electric vehicle to enter the deep-economic mode when an instruction for entering the deep-economic mode is received, and to control the electric vehicle to quit from the deep-economic mode when an instruction for quitting from the deep-economic mode is received, wherein the first predetermined traveling range is greater than the second predetermined traveling range.

8. The system according to claim 7, wherein the controlling module is further configured, after the electric vehicle enters the economic mode,

to reduce a torque response speed; to reduce energy consumption of a part of components of the electric vehicle; when the obtained remaining range of the electric vehicle in the economic mode is greater than a third predetermined traveling range, to prompt the user whether to quit from the economic mode, and to control the electric vehicle to quit from the economic mode when the instruction for quitting from the economic mode is received, wherein the third predetermined traveling range is greater the first predetermined traveling range; wherein the controlling module is further configured, after the electric vehicle enters the deep-economic mode, to limit a traveling speed of the electric vehicle within a predetermined traveling speed; to further reduce the energy consumption of the a part of components of the electric vehicle and/or deactivate the part of components of the electric vehicle; and when the obtained remaining range of the electric vehicle in the deep-economic mode is greater than a fourth predetermined traveling range, to prompt the user whether to quit from the deep-economic mode, and to control the electric vehicle to quit from the deep-economic mode when the instruction for quitting from the deep-economic mode is received, wherein the fourth predetermined traveling range is smaller than the third predetermined traveling range and greater than the first predetermined traveling range.

9. An electric vehicle, comprising a system for determining a remaining range of an electric vehicle according to any one of claims 5 to 8.

10. A non-volatile computer storage medium, wherein the computer storage medium has one or more programs stored therein, and when the one or more programs are executed by a device, the method for determining a remaining range of an electric vehicle according to any one of claims 1 to 4 is executed by the device.

**Patentansprüche**

1. Ein Verfahren zum Bestimmen der verbleibenden Reichweite eines Elektrofahrzeugs, umfassend:

Erfassen (S101) eines Entladestroms und einer Entladespannung einer Leistungsbatterie, und Berechnen der aktuellen Entladeenergie der Leistungsbatterie gemäß dem Entladestrom und der Entladespannung; Erfassen (S102) eines Ladezustands der Leistungsbatterie und einer Gesamtzahl von Zyklen des vollständigen Ladens und vollständigen Entladens, die die Leistungsbatterie durchlaufen hat; Eingabe (S103) des Ladezustandes der Leistungsbatterie, der Gesamtzahl der Zyklen des vollständigen Ladens und vollständigen Entladens und der Gesamtentladeenergie der Leistungsbatterie innerhalb einer Einheitszeitdauer in ein neuronales Netz, um einen Reichweitenkompensationskoeffizienten zu erhalten; wenn sich das Elektrofahrzeug in einem Fahrzustand befindet, Berechnen (S104) der von dem Elektrofahrzeug in der Einheitszeitdauer zurückgelegten Entfernung; und Erhalten (S105) der verbleibenden Reichweite des Elektrofahrzeugs entsprechend der zurückgelegten Entfernung des Elektrofahrzeugs innerhalb der Einheitszeitdauer, dem Reichweitenkompensationskoeffizienten, dem Ladezustand der Leistungsbatterie und einer Differenz zwischen dem Ladezustand der Leistungsbatterie vor der Einheitszeitdauer und dem Ladezustand der Leistungsbatterie nach der Einheitszeitdauer, wobei der Reichweitenkompensationskoeffizient erhalten wird durch: Entwurf eines neuronalen radialen Basisfunktionen-Netzwerks, wobei das neuronale radiale Basisfunktionen-Netzwerk eine Eingabeschicht, eine verborgene Schicht und eine Ausgabeschicht umfasst, und das neuronale radiale Basisfunktionen-Netzwerk durch folgende Formel beschrieben wird:

$$y(x,w) = \sum_{i=1}^{H} w_i \, j \left( P x - c_i P \right)$$

wobei $x$ einen Eingabevektor bezeichnet, und $x = [SOC \quad N \quad W_{Batt}]^{\mathsf{T}}$, $y(x,w)$ einen Ausgabe-Reichweitenkompensationskoeffizienten $K$ bezeichnet, $w_i$ einen gewichteten Wert bezeichnet, $i$ ein Neuron der verborgenen Schicht bezeichnet, $H$ die Anzahl der Neuronen der verborgenen Schicht bezeichnet, $c_i$ einen Zentralvektor bezeichnet, $P x - c_i P$ einen Abstand zu einem Zentrum bezeichnet, $j$ eine radiale Basisfunktion bezeichnet, $W_{Batt}$ die Gesamtentladeenergie der Leistungsbatterie bezeichnet, $SOC$ den Ladezustand der Leistungsbatterie bezeichnet, und $N$ die Gesamtzahl der Zyklen des vollständigen Ladens und vollständigen Entladens, die die Leistungsbatterie durchlaufen hat, bezeichnet; Trainieren des neuronalen radialen Basisfunktionen-Netzwerks mit einer Vielzahl von Sätzen aus Gesamtentladeenergie, Ladezustand der Leistungsbatterie und Gesamtzahl der Zyklen des vollständigen Ladens und vollständigen Entladens; und Erhalten des Reichweitenkompensationskoeffizienten durch ein vollständig trainiertes neuronales radiale Basisfunktionen-Netzwerk, und wobei die verbleibende Reichweite des Elektrofahrzeugs mit folgender Formel erhalten wird:

$$L = \frac{SOC}{\dfrac{\Delta SOC}{S} \times K}$$

wobei $L$ die verbleibende Reichweite des Elektrofahrzeugs bezeichnet, $\Delta SOC$ die Differenz zwischen dem Ladezustand der Leistungsbatterie vor der Einheitszeitdauer und dem Ladezustand der Leistungsbatterie nach der Einheitszeitdauer bezeichnet, $SOC$ den Ladezustand der Leistungsbatterie bezeichnet, $S$ die vom Elektrofahrzeug innerhalb der Einheitszeitdauer zurückgelegte Entfernung bezeichnet und $K$ den Reichweitenkompensationskoeffizienten bezeichnet.

2. Verfahren nach Anspruch 1, ferner umfassend: wenn sich das Elektrofahrzeug in einem statischen Zustand befindet, wird die verbleibende Reichweite des Elektrofahrzeugs durch die folgende Formel erhalten:

$$L = L_{old} - \frac{W_{Batt\_60s} \times S}{W_{Batt\_old}}$$

wobei $L_{old}$ die verbleibende Reichweite des Elektrofahrzeugs vor der Einheitszeitdauer bezeichnet, $W_{Batt\_60s}$ die Gesamtentladeenergie der Leistungsbatterie innerhalb der Einheitszeitdauer bezeichnet, und $W_{Batt\_old}$ die Gesamtentladeenergie der Leistungsbatterie innerhalb einer vorherigen Einheitszeitdauer bezeichnet.

3. Verfahren nach Anspruch 1 oder 2, nach Ermittlung der verbleibenden Reichweite des Elektrofahrzeugs ferner umfassend:

wenn die verbleibende Reichweite des Elektrofahrzeugs kleiner ist als eine erste vorbestimmte Fahrreichweite, Abfragen des Benutzers, ob er in einen ökonomischen Modus eintreten will, Steuern des Eintretens des Elektrofahrzeugs in den ökonomischen Modus, wenn eine Anweisung zum Eintritt in den ökonomischen Modus empfangen wird, und Steuern des Verlassens des ökonomischen Modus des Elektrofahrzeugs, wenn eine Anweisung zum Verlassen des ökonomischen Modus empfangen wird; wenn die verbleibende Reichweite des Elektrofahrzeugs kleiner ist als eine zweite vorbestimmte Fahrreichweite, Abfragen des Benutzers, ob er in einen hochökonomischen Modus eintreten will, Steuern des Eintretens des Elektrofahrzeugs in den hochökonomischen Modus, wenn eine Anweisung zum Eintritt in den hochökonomischen Modus empfangen wird, und Steuern des Verlassens des hochökonomischen Modus des Elektrofahrzeugs, wenn eine Anweisung zum Verlassen des hochökonomischen Modus empfangen wird, wobei die erste vorbestimmte Fahrreichweite größer ist als die zweite vorbestimmte Fahrreichweite.

4. Verfahren nach einem der Ansprüche 1 bis 3, wobei das Verfahren, nachdem das Elektrofahrzeug in den ökonomischen Modus eingetreten ist, ferner umfasst:

Verringerung einer Drehmoment-Ansprechgeschwindigkeit; Reduzierung des Energieverbrauchs eines Teils der Komponenten des Elektrofahrzeugs; wenn die erhaltene verbleibende Reichweite des Elektrofahrzeugs im ökonomischen Modus größer ist als eine dritte vorbestimmte Fahrreichweite, Abfragen des Benutzers, ob er den ökonomischen Modus verlassen will, und Steuern des Verlassens des ökonomischen Modus des Elektrofahrzeugs, wenn die Anweisung zum Verlassen des ökonomischen Modus empfangen wird, wobei die dritte vorbestimmte Fahrreichweite größer ist als die erste vorbestimmte Fahrreichweite;

wobei das Verfahren, nachdem das Elektrofahrzeug in den hochökonomischen Modus eingetreten ist, ferner umfasst:

Begrenzung der Fahrgeschwindigkeit des Elektrofahrzeugs auf eine vorgegebene Fahrgeschwindigkeit;

weitere Reduzierung des Energieverbrauchs des Teils der Komponenten des Elektrofahrzeugs und/oder Deaktivierung des Teils der Komponenten des Elektrofahrzeugs; und

wenn die erhaltene verbleibende Reichweite des Elektrofahrzeugs im hochökonomischen Modus größer ist als eine vierte vorbestimmte Fahrreichweite, Abfragen des Benutzers, ob er den hochökonomischen Modus verlassen will, und Steuern des Verlassens des hochökonomischen Modus des Elektrofahrzeugs, wenn die Anweisung zum Verlassen des hochökonomischen Modus empfangen wird, wobei die vierte vorbestimmte Fahrreichweite kleiner ist als die dritte vorbestimmte Fahrreichweite und größer ist als die erste vorbestimmte Fahrreichweite.

5. Ein System (600) zum Bestimmen der verbleibenden Reichweite eines Elektrofahrzeugs, umfassend:

ein Energieberechnungsmodul (610), das so konfiguriert ist, dass es einen Entladestrom und eine Entladespannung einer Leistungsbatterie erfasst und die aktuelle Entladeenergie der Leistungsbatterie gemäß dem Entladestrom und der Entladespannung berechnet;

ein Modul zur Berechnung des Reichweitenkompensationskoeffizienten (620), das so konfiguriert ist, dass es einen Ladezustand der Leistungsbatterie und eine Gesamtzahl von Zyklen für vollständiges Laden und vollständiges Entladen, die die Leistungsbatterie durchlaufen hat, erfasst und den Ladezustand der Leistungsbatterie, die Gesamtzahl der Zyklen für vollständiges Laden und vollständiges Entladen und die Gesamtentladeenergie der Leistungsbatterie innerhalb einer Einheitszeitdauer in ein neuronales Netz eingibt, um einen Reichweitenkompensationskoeffizienten zu erhalten;

ein Restreichweiten-Ermittlungsmodul (630), das so konfiguriert ist, dass es, wenn sich das Elektrofahrzeug in einem Fahrzustand befindet, die von dem Elektrofahrzeug in der Einheitszeitdauer zurückgelegte Strecke berechnet und die verbleibende Reichweite des Elektrofahrzeugs gemäß der Fahrstrecke des Elektrofahrzeugs innerhalb der Einheitszeitdauer, dem Reichweitenkompensationskoeffizienten, dem Ladezustand der Leistungsbatterie und einer Differenz zwischen dem Ladezustand der Leistungsbatterie vor der Einheitszeitdauer und dem Ladezustand der Leistungsbatterie nach der Einheitszeitdauer ermittelt,
wobei der Reichweitenkompensationskoeffizient erhalten wird durch:

Entwurf eines neuronalen radialen Basisfunktionen-Netzwerks, wobei das neuronale radiale Basisfunktionen-Netzwerk eine Eingabeschicht, eine verborgene Schicht und eine Ausgabeschicht umfasst, und das neuronale radiale Basisfunktionen-Netzwerk durch folgende Formel beschrieben wird:

$$y(x,w) = \sum_{i=1}^{H} w_i j \left( Px - c_i P \right)$$

wobei $x$ einen Eingabevektor bezeichnet, und $x = [SOC\ N\ W_{Batt}]^{\mathrm{T}}$, $y(x,w)$ einen Ausgabe-Reichweitenkompensationskoeffizienten $K$ bezeichnet, $w_i$ einen gewichteten Wert bezeichnet, $i$ ein Neuron der verborgenen Schicht bezeichnet, $H$ die Anzahl der Neuronen der verborgenen Schicht bezeichnet, $c_i$ einen Zentralvektor bezeichnet, $P\ x\text{-}c_i\ P$ einen Abstand zu einem Zentrum bezeichnet, $j$ eine radiale Basisfunktion bezeichnet, $W_{Batt}$ die Gesamtentladeenergie der Leistungsbatterie bezeichnet, $SOC$ den Ladezustand der Leistungsbatterie bezeichnet, und $N$ die Gesamtzahl der Zyklen des vollständigen Ladens und vollständigen Entladens, die die Leistungsbatterie durchlaufen hat, bezeichnet;
Trainieren des neuronalen radialen Basisfunktionen-Netzwerks mit einer Vielzahl von Sätzen aus Gesamtentladeenergie, Ladezustand der Leistungsbatterie und Gesamtzahl der Zyklen des vollständigen Ladens und vollständigen Entladens; und
Erhalten des Reichweitenkompensationskoeffizienten durch ein vollständig trainiertes neuronales radiale Basisfunktionen-Netzwerk, und
wobei die verbleibende Reichweite des Elektrofahrzeugs mit folgender Formel erhalten wird:

$$L = \frac{SOC}{\frac{\Delta SOC}{S} \times K}$$

wobei $L$ die verbleibende Reichweite des

Elektrofahrzeugs bezeichnet, $\Delta SOC$ die Differenz zwischen dem Ladezustand der Leistungsbatterie vor der Einheitszeitdauer und dem Ladezustand der Leistungsbatterie nach der Einheitszeitdauer bezeichnet, $SOC$ den Ladezustand der Leistungsbatterie bezeichnet, $S$ die vom Elektrofahrzeug innerhalb der Einheitszeitdauer zurückgelegte Entfernung bezeichnet und $K$ den Reichweitenkompensationskoeffizienten bezeichnet.

6. System nach Anspruch 5, wobei das Restreichweiten-Ermittlungsmodul (630) ferner wie folgt konfiguriert ist:

   wenn sich das Elektrofahrzeug in einem statischen Zustand befindet, wird die verbleibende Reichweite des Elektrofahrzeugs durch die folgende Formel erhalten:

$$L = L_{old} - \frac{W_{Batt\_60s} \times S}{W_{Batt\_old}}$$

   wobei $L_{old}$ die verbleibende Reichweite des Elektrofahrzeugs vor der Einheitszeitdauer bezeichnet, $W_{Batt\_60s}$ die Gesamtentladeenergie der Leistungsbatterie innerhalb der Einheitszeitdauer bezeichnet, und $W_{Batt\_old}$ die Gesamtentladeenergie der Leistungsbatterie innerhalb einer vorherigen Einheitszeitdauer bezeichnet.

7. System nach Anspruch 5 oder 6, ferner ein Steuermodul umfassend, wobei das Steuermodul wie folgt konfiguriert ist:

   wenn die verbleibende Reichweite des Elektrofahrzeugs kleiner ist als eine erste vorbestimmte Fahrreichweite, Abfragen des Benutzers, ob er in einen ökonomischen Modus eintreten will, Steuern des Eintretens des Elektrofahrzeugs in den ökonomischen Modus, wenn eine Anweisung zum Eintritt in den ökonomischen Modus empfangen wird, und Steuern des Verlassens des ökonomischen Modus des Elektrofahrzeugs, wenn eine Anweisung zum Verlassen des ökonomischen Modus empfangen wird;
   wenn die verbleibende Reichweite des Elektrofahrzeugs kleiner ist als eine zweite vorbestimmte Fahrreichweite, Abfragen des Benutzers, ob er in einen hochökonomischen Modus eintreten will, Steuern des Eintretens des Elektrofahrzeugs in den hochökonomischen Modus, wenn eine Anweisung zum Eintritt in den hochökonomischen Modus empfangen wird, und Steuern des Verlassens des hochökonomischen Modus des Elektrofahrzeugs, wenn eine Anweisung zum Verlassen des hochökonomischen Modus empfangen wird, wobei die erste vorbestimmte Fahrreichweite größer ist als die zweite vorbestimmte Fahrreichweite.

8. System nach Anspruch 7, wobei die Konfiguration des Steuermoduls, nachdem das Elektrofahrzeug in den ökonomischen Modus eingetreten ist, ferner umfasst:

   Verringerung einer Drehmoment-Ansprechgeschwindigkeit;
   Reduzierung des Energieverbrauchs eines Teils der Komponenten des Elektrofahrzeugs;
   wenn die erhaltene verbleibende Reichweite des Elektrofahrzeugs im ökonomischen Modus größer ist als eine dritte vorbestimmte Fahrreichweite, Abfragen des Benutzers, ob er den ökonomischen Modus verlassen will, und Steuern des Verlassens des ökonomischen Modus des Elektrofahrzeugs, wenn die Anweisung zum Verlassen des ökonomischen Modus empfangen wird, wobei die dritte vorbestimmte Fahrreichweite größer ist als die erste vorbestimmte Fahrreichweite;
   wobei die Konfiguration des Steuermoduls, nachdem das Elektrofahrzeug in den hochökonomischen Modus eingetreten ist, ferner umfasst:

   Begrenzung der Fahrgeschwindigkeit des Elektrofahrzeugs auf eine vorgegebene Fahrgeschwindigkeit;
   weitere Reduzierung des Energieverbrauchs des Teils der Komponenten des Elektrofahrzeugs und/oder Deaktivierung des Teils der Komponenten des Elektrofahrzeugs; und
   wenn die erhaltene verbleibende Reichweite des Elektrofahrzeugs im hochökonomischen Modus größer ist als eine vierte vorbestimmte Fahrreichweite, Abfragen des Benutzers, ob er den hochökonomischen Modus verlassen will, und Steuern des Verlassens des hochökonomischen Modus des Elektrofahrzeugs, wenn die Anweisung zum Verlassen des hochökonomischen Modus empfangen wird, wobei die vierte vorbestimmte Fahrreichweite kleiner ist als die dritte vorbestimmte Fahrreichweite und größer ist als die erste vorbestimmte Fahrreichweite.

9. Ein Elektrofahrzeug, umfassend ein System zur Bestimmung der verbleibenden Reichweite eines Elektrofahrzeugs nach einem der Ansprüche 5 bis 8.

10. Ein nichtflüchtiges Computerspeichermedium, wobei auf dem Computerspeichermedium eines oder mehrere Programme gespeichert sind, und wenn das eine oder die mehreren Programme von einem Gerät ausgeführt werden, das Verfahren zur Bestimmung der verbleibenden Reichweite eines Elektrofahrzeugs gemäß einem der Ansprüche 1 bis 4 von dem Gerät ausgeführt wird.

**Revendications**

1. Procédé pour déterminer l'autonomie restante d'un véhicule électrique, le procédé comprenant les étapes suivantes :

    acquérir (S101) un courant de décharge et une tension de décharge d'une batterie d'alimentation, et calculer l'énergie de décharge courante de la batterie d'alimentation en fonction du courant de décharge et de la tension de décharge ;
    acquérir (S102) l'état de charge de la batterie d'alimentation et le nombre total de cycles de charge complète et de décharge complète que la batterie d'alimentation a subis ;
    entrer (S103), dans un réseau neuronal, l'état de charge de la batterie d'alimentation, le nombre total de cycles de charge complète et de décharge complète et l'énergie de décharge globale de la batterie d'alimentation pendant une durée unitaire, pour obtenir un coefficient de compensation d'autonomie ;
    lorsque le véhicule électrique est dans un état de déplacement, calculer (S104) la distance parcourue par le véhicule électrique au cours de la durée unitaire ; et
    obtenir (S105) l'autonomie restante du véhicule électrique en fonction de la distance parcourue par le véhicule électrique pendant la durée unitaire, du coefficient de compensation d'autonomie, de l'état de charge de la batterie d'alimentation, et d'une différence entre l'état de charge de la batterie d'alimentation avant la durée unitaire et l'état de charge de la batterie d'alimentation après la durée unitaire,
    où le coefficient de compensation d'autonomie est obtenu :
    en concevant un réseau neuronal à fonction de base radiale, le réseau neuronal à fonction de base radiale comprenant une couche d'entrée, une couche cachée et
    une couche de sortie, et le réseau neuronal à fonction de base radiale étant désigné par la formule suivante :

$$y(x,w) = \sum_{i=1}^{H} w_i j(Px - c_i P)$$

où x représente un vecteur d'entrée, et $x = [SOC\ N\ W_{Batt}]^T$, y(x, w) représente un coefficient de compensation d'autonomie de sortie K, $w_i$ représente une valeur pondérée, i représente un neurone de la couche cachée, H représente le nombre de neurones de la couche cachée, $c_i$ représente un vecteur central, $Px-c_iP$ représente une distance à un centre, j représente une fonction de base radiale, représente l'énergie de décharge globale de la batterie d'alimentation, SOC représente l'état de charge de la batterie d'alimentation, et N représente le nombre total de cycles de charge complète et de décharge complète que la batterie d'alimentation a subis ;
entraîner le réseau neuronal à fonction de base radiale en fonction d'une pluralité d'ensembles d'énergie de décharge globale, de l'état de charge de la batterie d'alimentation, et du nombre total de cycles de charge complète et de décharge complète ; et
obtenir le coefficient de compensation d'autonomie en fonction d'un réseau neuronal à fonction de base radiale complètement entraîné, et où l'autonomie restante du véhicule électrique est obtenue par la formule suivante :

$$L = \frac{SOC}{\dfrac{\Delta SOC}{S}} \times K$$

où L représente l'autonomie restante du véhicule électrique, $\Delta SOC$ représente la différence entre l'état de charge de la batterie d'alimentation avant la durée unitaire et l'état de charge de la batterie d'alimentation après la durée unitaire, SOC représente l'état de charge de la batterie d'alimentation, S représente la distance parcourue par le véhicule électrique pendant la durée unitaire, et K représente le coefficient de compensation d'autonomie.

2. Procédé selon la revendication 1, comprenant en outre :
lorsque le véhicule électrique est dans un état statique, l'autonomie restante du véhicule électrique est obtenue par la formule suivante :

$$L = L_{old} - \frac{W_{Batt\_60s} \times S}{W_{Batt\_old}}$$

où $L_{old}$ représente l'autonomie restante du véhicule électrique avant la durée unitaire, $W_{Batt\_60s}$ représente l'énergie de décharge globale de la batterie d'alimentation pendant la durée unitaire, et $W_{Batt\_old}$ représente l'énergie de décharge globale de la batterie d'alimentation pendant une durée unitaire précédente.

3. Procédé selon la revendication 1 ou la revendication 2 comprenant en outre, après avoir obtenu l'autonomie restante du véhicule électrique, les étapes suivantes :

lorsque l'autonomie restante du véhicule électrique est inférieure à une première autonomie prédéterminée, demander à un utilisateur s'il souhaite entrer dans un mode économique, commander le véhicule électrique pour qu'il entre dans le mode économique lors de la réception d'une instruction pour entrer dans le mode économique, et commander le véhicule électrique pour qu'il quitte le mode économique lors de la réception d'une instruction pour quitter le mode économique ; lorsque l'autonomie restante du véhicule électrique est inférieure à une deuxième autonomie prédéterminée, demander à l'utilisateur s'il souhaite entrer dans un mode économique profond, commander le véhicule électrique pour qu'il entre dans le mode économique profond lorsqu'il reçoit une instruction pour entrer dans le mode économique profond, et commander le véhicule électrique pour qu'il quitte le mode économique profond lorsqu'il reçoit une instruction pour quitter le mode économique profond, où la première autonomie de déplacement prédéterminée est supérieure à la deuxième autonomie de déplacement prédéterminée.

4. Procédé selon l'une quelconque des revendications 1 à 3, dans lequel après le passage du véhicule électrique en mode économique, le procédé comprend en outre les étapes suivantes :

réduire une vitesse de réponse au couple ;
réduire la consommation d'énergie d'une partie des composants du véhicule électrique ;
lorsque l'autonomie restante obtenue du véhicule électrique dans le mode économique est supérieure à une troisième autonomie de déplacement prédéterminée, demander à l'utilisateur s'il souhaite quitter le mode économique, et commander le véhicule électrique pour qu'il quitte le mode économique lorsqu'il reçoit l'instruction de quitter le mode économique, où la troisième autonomie de déplacement prédéterminée est supérieure à la première autonomie de déplacement prédéterminée ;
où, après que le véhicule électrique est entré dans le mode économique profond, le procédé comprend en outre les étapes suivantes :

limiter une vitesse de déplacement du véhicule électrique à une vitesse de déplacement prédéterminée ;
réduire davantage la consommation d'énergie d'une partie des composants du véhicule électrique et/ou désactiver une partie des composants du véhicule électrique ; et
lorsque l'autonomie restante obtenue du véhicule électrique dans le mode économique profond est supérieure à une quatrième autonomie de déplacement prédéterminée, demander à l'utilisateur s'il souhaite quitter le mode économique profond, et commander le véhicule électrique pour quitter le mode économique profond lors de la réception de l'instruction de quitter le mode économique profond, où la quatrième autonomie de déplacement prédéterminée est inférieure à la troisième autonomie de déplacement prédéterminée et supérieure à la première autonomie de déplacement prédéterminée.

5. Système (600) pour déterminer l'autonomie restante d'un véhicule
électrique, le système comprenant :

un module de calcul d'énergie (610), configuré pour acquérir un courant de décharge et une tension de décharge d'une batterie d'alimentation, et pour calculer l'énergie de décharge courante de la batterie d'alimentation en fonction du courant de décharge et de la tension de décharge ;
un module de calcul de coefficient de compensation d'autonomie (620), configuré pour acquérir l'état de charge de la batterie d'alimentation et le nombre total de cycles de charge complète et de décharge complète que la batterie d'alimentation a subis, et entrer, dans un réseau neuronal, l'état de charge de la batterie d'alimentation, le nombre total de cycles de charge complète et de décharge complète et l'énergie de décharge globale de la batterie d'alimentation lors d'une durée unitaire, pour obtenir un coefficient de compensation d'autonomie ;
un module d'estimation d'autonomie restante (630), configuré, lorsque le véhicule électrique est dans un état de déplacement, pour calculer la distance parcourue par le véhicule électrique pendant la durée unitaire, et obtenir l'autonomie restante du véhicule électrique selon la distance de déplacement du véhicule électrique lors de la durée unitaire, le coefficient de compensation d'autonomie, l'état de charge de la batterie d'alimentation, et une différence entre l'état de charge de la batterie d'alimentation avant la durée unitaire et l'état de charge de la batterie d'alimentation après la durée unitaire,
où le coefficient de compensation d'autonomie est obtenu :
en concevant un réseau neuronal à fonction de base radiale, le réseau neuronal à fonction de base radiale comprenant une couche d'entrée, une couche cachée et une couche de sortie, et le réseau neuronal à fonction de base radiale étant désigné par la formule suivante :

$$y(x,w) = \sum_{i=1}^{H} w_i j(Px - c_i P)$$

où x représente un vecteur d'entrée, et $x = [SOC\ N\ W_{Battl}]^T$, y(x, w) représente un coefficient de compensation d'autonomie de sortie K, $w_i$ représente une valeur pondérée, i représente un neurone de la couche cachée, H représente le nombre de neurones de la couche cachée, $c_i$ représente un vecteur central, $P x\text{-}c_i P$ représente une distance à un centre, j représente une fonction de base radiale, $W_{Batt}$ représente l'énergie de décharge globale de la batterie d'alimentation, SOC représente l'état de charge de la batterie d'alimentation, et N représente le nombre total de cycles de charge complète et de décharge complète que la batterie d'alimentation a subis ;

entraîner le réseau neuronal à fonction de base radiale en fonction d'une pluralité d'ensembles d'énergie de décharge globale, de l'état de charge de la batterie d'alimentation, et du nombre total de cycles de charge complète et de décharge complète ; et

obtenir le coefficient de compensation d'autonomie en fonction d'un réseau neuronal à fonction de base radiale complètement entraîné, et où l'autonomie restante du véhicule électrique est obtenue par la formule suivante :

$$L = \frac{SOC}{\frac{\Delta SOC}{S} \times K}$$

où L représente l'autonomie restante du véhicule électrique, $\Delta SOC$ représente la différence entre l'état de charge de la batterie d'alimentation avant la durée unitaire et l'état de charge de la batterie d'alimentation après la durée unitaire, SOC représente l'état de charge de la batterie d'alimentation, S représente la distance parcourue par le véhicule électrique pendant la durée unitaire, et K représente le coefficient de compensation d'autonomie.

6. Système selon la revendication 5, dans lequel le module d'estimation d'autonomie restante (630) est en outre configuré :

lorsque le véhicule électrique est dans un état statique, pour obtenir l'autonomie restante du véhicule électrique par la formule suivante :

$$L = L_{old} - \frac{W_{Batt\_60s} \times S}{W_{Batt\_old}}$$

où $L_{old}$ représente l'autonomie restante du véhicule électrique avant la durée unitaire, $W_{Batt\_60s}$ représente l'énergie de décharge globale de la batterie d'alimentation pendant la durée unitaire, et $W_{Batt\_old}$ représente l'énergie de décharge globale de la batterie d'alimentation pendant une durée unitaire précédente.

7. Système selon la revendication 5 ou la revendication 6, comprenant en outre un module de commande, où le module de commande est configuré : lorsque l'autonomie restante du véhicule électrique est inférieure à une première autonomie prédéterminée, pour demander à un utilisateur s'il souhaite entrer dans un mode économique, pour commander le véhicule électrique afin qu'il entre dans le mode économique lors de la réception d'une instruction pour entrer dans le mode économique, et pour commander le véhicule électrique afin qu'il quitte le mode économique lorsqu'une instruction pour quitter le mode économique est reçue ;

lorsque l'autonomie restante du véhicule électrique est inférieure à une deuxième autonomie prédéterminée, pour demander à l'utilisateur s'il souhaite entrer dans un mode économique profond, pour commander le véhicule électrique afin qu'il entre dans le mode économique profond lorsqu'une instruction pour entrer dans le mode économique profond est reçue, et pour commander le véhicule électrique afin qu'il quitte le mode économique profond lorsqu'une instruction pour quitter le mode économique profond est reçue, où la première autonomie de déplacement prédéterminée est supérieure à la deuxième autonomie de déplacement prédéterminée.

8. Système selon la revendication 7, dans lequel le module de commande est en outre configuré, après que le véhicule électrique est entré dans le mode économique :

pour réduire la vitesse de réponse au couple ;
pour réduire la consommation d'énergie d'une partie des composants du véhicule électrique ;
lorsque l'autonomie restante obtenue du véhicule électrique dans le mode économique est supérieure à une troisième autonomie de déplacement prédéterminée, pour demander à l'utilisateur s'il souhaite quitter le mode économique, et pour commander le véhicule électrique afin qu'il quitte le mode économique lorsque l'instruction de quitter le mode économique est reçue, où la troisième autonomie de déplacement prédéterminée est supérieure à la première autonomie de déplacement prédéterminée ;

où le module de commande est en outre configuré, après que le véhicule électrique est entré dans le mode économique profond :

pour limiter une vitesse de déplacement du véhicule électrique à une vitesse de déplacement prédéterminée ;

pour réduire davantage la consommation d'énergie d'une partie des composants du véhicule électrique et/ou désactiver une partie des composants du véhicule électrique ; et

lorsque l'autonomie restante obtenue du véhicule électrique dans le mode économique profond est supérieure à une quatrième autonomie de déplacement prédéterminée, pour demander à l'utilisateur s'il souhaite quitter le mode économique profond, et commander le véhicule électrique pour quitter le mode économique profond lors de la réception de l'instruction de quitter le mode économique profond, où la quatrième autonomie de déplacement prédéterminée est inférieure à la troisième autonomie de déplacement prédéterminée et supérieure à la première autonomie de déplacement prédéterminée.

9. Véhicule électrique, comprenant un système pour déterminer l'autonomie restante d'un véhicule électrique selon l'une quelconque des revendications 5 à 8.

10. Support de stockage informatique non volatil, où le support de stockage informatique comporte un ou plusieurs programmes y étant stockés et, lorsque les un ou plusieurs programmes sont exécutés par un dispositif, le procédé pour déterminer l'autonomie restante d'un véhicule électrique selon l'une quelconque des revendications 1 à 4 est exécuté par le dispositif.

acquiring a discharging current and a discharging voltage of a power battery, and computing current discharging energy of the power battery according to the discharging current and the discharging voltage — S101

acquiring a state of charge and a number of charging-discharging cycles of the power battery — S102

inputting the state of charge and the number of charging-discharging cycles of the power battery and overall discharging energy of the power battery within a unit time duration to a neural network, to obtain an endurance range compensation coefficient — S103

computing a traveling distance of the electric vehicle within the unit time duration when the electric vehicle is in a traveling state — S104

obtaining the remaining endurance range of the electric vehicle according to the traveling distance of the electric vehicle within the unit time duration, the endurance range compensation coefficient, the state of charge of the power battery, and a difference between the state of charge of the power battery before the unit time duration and the state of charge of the power battery after the unit time duration — S105

Fig. 1

number of cycles of charging-discharging N

battery SOC

battery energy consumption

neural network

compensation coefficient K

Fig. 2

start

computing
compensation
coefficient K — S301

determining moving state of
vehicle — S302 — NO → computing the
endurance range in
static state — S304

YES

computing endurance
range in moving state — S303

displaying on
meter

S305

end

Fig. 3

start

endurance range less than 50km

YES

prompting whether to enter
common economic mode

YES

energy
management → limiting torque grandient — YES

increasing temperature
threshold

NO

requiring by the user to quit
from the energy management

NO

endurance range greater than
70km

YES

quiting from the
energy management

Fig. 4

start

endurance range less than 25km

YES

prompting whether to enter the deep-economic mode

YES

energy management → maximum traveling speed

deactivating DC/DC

adjusting EPS power — YES

disabling cooling system

deactivating air conditioning

NO

requiring by the user to quit from the economic mode

NO

endurance range greater than 55km

YES

quiting from the energy management

Fig. 5

system 600 for estimating remaining endurance range of electric vehicle

| energy computing module 610 | endurance range compensation coefficient computing module 620 | remaining endurance range estimating module 630 |

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510726116

- US 2012143435 A1